# EUROPEAN PATENT APPLICATION

(11) **EP 4 485 985 A1**
(43) Date of publication of application: **01.01.2025**
(21) Application number: 23181452.6
(22) Date of filing: 26.06.2023
(51) Int. Cl.: H04W 4/40, H04W 72/51, H04W 28/02, G01C 21/34, H04W 72/1268, H04W 72/56

(54) **DATA MANAGEMENT OF A VEHICLE SYSTEM**

(71) Applicant: Einride AB, 111 56 Stockholm (SE)
(72) Inventor: BOHNSACK, Erik, 111 56 Stockholm (SE); EDHOLM, Emil, 111 56 Stockholm (SE); KULLBERG, Niklas, 111 56 Stockholm (SE); KUTKAITE, Ausrine, 111 56 Stockholm (SE); HALLGREN, Per, 111 56 Stockholm (SE); LARSSON, Christian, 111 56 Stockholm (SE); OHLSON, Tomas, 111 56 Stockholm (SE)
(74) Representative: Laine IP Oy

(57) **Abstract**

According to an example aspect of the present invention, there is provided an apparatus configured to store information of a first set of data items stored in a first vehicle, the data items of the first set being each assigned a respective priority value, obtain, for the first vehicle, a first set of future connectivity opportunities, each future connectivity opportunity comprising a future time and a location that the future connectivity opportunity is predicted to occur at, and send instructions to a vehicle application of the first vehicle, the instructions instructing the first vehicle to transmit at least one from among the first set of data items during at least one from among the first set of future connectivity opportunities.

## Description

### FIELD

The present disclosure relates to management of data flows, for example in the context of autonomous vehicles or autonomous vehicle systems.

### BACKGROUND

With increasing digitalization vehicles, such as cars, generate larger and larger quantities of data which is of interest in optimizing vehicle performance and fleet management, for example. However, as vehicles are mobile, transferring the data in a timely manner presents challenges. Mobile entities do not have continuous access to fixed, high-bandwidth communication connections.

Some vehicles have autonomous systems which may be configured to manage aspects of the vehicle partly, or entirely, autonomously. Certain vehicles are autonomous in the sense that driving tasks, such as navigation, steering, acceleration and braking are partly, or even completely, automated.

### SUMMARY

According to some aspects, there is provided the subject-matter of the independent claims. Some embodiments are defined in the dependent claims.

According to a first aspect of the present disclosure, there is provided an apparatus comprising at least one processing core and at least one memory in communication therewith storing instructions that, when executed by the at least one processing core, cause the apparatus at least to store information of a first set of data items stored in a first vehicle, the data items of the first set being each assigned a respective priority value, obtain, for the first vehicle, a first set of future connectivity opportunities, each future connectivity opportunity comprising a future time and a location that the future connectivity opportunity is predicted to occur at, and send instructions to a vehicle application of the first vehicle, the instructions instructing the first vehicle to transmit at least one from among the first set of data items during at least one from among the first set of future connectivity opportunities, and a mapping module, in communication with the at least one processing core and at least one memory, configured to map the data items to be transmitted to the at least one connectivity opportunity based at least in part on the priority values assigned to the data items.

According to a second aspect of the present disclosure, there is provided a method for data item management of a vehicle system , the method comprising storing information of a first set of data items stored in a first vehicle, the data items of the first set being each assigned a respective priority value, obtaining, for the first vehicle, a first set of future connectivity opportunities, each future connectivity opportunity comprising a future time and a location that the future connectivity opportunity is predicted to occur at, and sending instructions to a vehicle application of the first vehicle, the instructions instructing the first vehicle to transmit at least one from among the first set of data items during at least one from among the first set of future connectivity opportunities, the method comprising mapping the data items to be transmitted to the at least one connectivity opportunity based at least in part on the priority values assigned to the data items.

According to a third aspect of the present disclosure, there is provided a non-transitory computer readable medium having stored thereon a set of computer readable instructions that, when executed by at least one processor, cause an apparatus to at least store information of a first set of data items stored in a first vehicle the data items of the first set being each assigned a respective priority value, obtain, for the first vehicle, a first set of future connectivity opportunities, each future connectivity opportunity comprising a future time and a location that the future connectivity opportunity is predicted to occur at, and send instructions to a vehicle application of the first vehicle, the instructions instructing the first vehicle to transmit at least one from among the first set of data items during at least one from among the first set of future connectivity opportunities, wherein the data items to be transmitted are mapped to the at least one connectivity opportunity based at least in part on the priority values assigned to the data items.

### BRIEF DESCRIPTION OF THE DRAWINGS

FIGURE 1 illustrates an example system in accordance with at least some embodiments of the present invention;
FIGURE 2A illustrates example connectivity opportunities and data items in accordance with at least some embodiments;
FIGURE 2B illustrates example connectivity opportunities and data items in accordance with at least some embodiments;
FIGURE 3 illustrates an example apparatus capable of supporting at least some embodiments of the present invention;
FIGURE 4A illustrates operation of a connectivity consolidation service;
FIGURE 4B illustrates operation of a connectivity consolidation service;
FIGURE 4C illustrates architecture of a connectivity consolidation service, and
FIGURE 5 is a flow graph of a method in accordance with at least some embodiments of the present invention.

### EMBODIMENTS

Disclosed herein are methods to facilitate timely access to vehicular data even in the case of uneven coverage of communication networks and inconsistent presence of high-bandwidth communication opportunities. In particular, transmission of data from vehicles is planned in a manner which utilizes connectivity opportunities which are predicted to present themselves, and respecting delay requirements which apply to various types of vehicle-generated data items. Further, a connectivity consolidation service to provide a single data egress point is herein described.

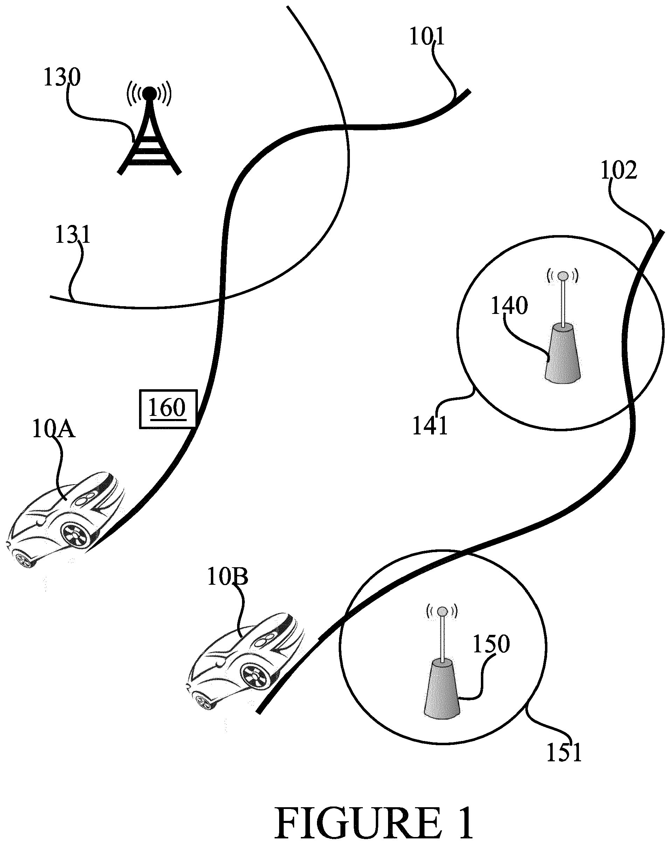

FIGURE 1 illustrates an example system in accordance with at least some embodiments of the present invention. Two routes 101, 102 are schematically illustrated in the figure. It is to be understood that a first vehicle 10A will traverse route 101 and a second vehicle 10B will traverse route 102. In general, a fleet of vehicles may be considered, the fleet possibly comprising only one vehicle, or more than two vehicles. The vehicles may be human-driven, semi-autonomous or fully autonomous. All vehicles of the fleet need not be of a same type in terms of automation, rather, some may be semi-autonomous and some fully autonomous, for example.

The Society of Automotive Engineers, SAE, has defined a six-level division of driving automation extent in automated driving systems, ADS, as follows: at level zero, the human driver performs all driving tasks such as steering, acceleration and braking. At level one, the vehicle has a single automated system for one driving task, such as cruise control to partially control the speed. At level two, the vehicle is configured to perform steering and acceleration while the human driver monitors all tasks and is able to take control at any time. At level three, the vehicle can detect environmental conditions and perform most driving tasks, but a human driver is still able to take control at any time. At level four ADS, the vehicle is configured to perform all driving tasks, however with restrictions as to a geographic area where this is allowed, and conditions, such as driving conditions, where automated operation is permitted. Human override capacity is optional. Finally at level five ADS, the vehicle can perform all driving tasks without restrictions as to driving conditions, and human monitoring of the vehicle is not needed. As the level of automation increases, the quantity of data used increases.

Whether human-driven or autonomous, vehicles 10A and 10B generate data items while they move about their routes. In case a vehicle is human-driven, its route 101, 102 may be generated by a navigation aid of the vehicle, for example, and then followed by the human driver. In case of an autonomous vehicle, its route 101, 102 may be generated by a navigation subsystem of the autonomous vehicle. The route may traverse plural road segments, which are not separately illustrated in FIGURE 1 to maintain clarity of the illustration. The vehicles may be cars or trucks by vehicle type, for example. The vehicles of the fleet need not all be of a same type in terms of vehicle type, either.

Data items generated by a vehicle during its movement along its route may comprise, for example, log files comprising information on maintenance needs of systems comprised in the vehicle. The data items may comprise indications of remaining fuel or electric charge in the vehicle. Further, the data items may comprise measurements of coverage of cellular or non-cellular wireless communication systems. Such measurements may comprise an indication of the communication system involved, a location where the measurement was made, and a signal quality value obtained as a result of the measurement, to support building and updating coverage maps. Further, data items may comprise sensor data recorded by sensors comprised in the vehicle. Examples of sensor data include lidar data, image frame data from a still or video camera sensor, temperature sensor data, humidity sensor data and medical sensor data from a human being inside the vehicle. The sizes of the data items vary greatly, as e.g. a temperature sensor reading is very compact, while a high-definition video clip may be very large.

The data items may be assigned priority values. In particular, each data item may have an assigned priority value specific to this data item. As is the case with the sizes of the data items, also their priorities vary greatly. For example, a quantity of motor oil remaining in a vehicle changes only very slowly, wherefore transmitting a data item relating to it may be assigned a low priority, while a sudden medical emergency inside the vehicle, or an imminent risk of a traffic accident, is of extreme priority and requires immediate processing. Another example of a data item is state of charge, SoC, of a battery of an electric vehicle, which can be an important quantity to monitor but also one that changes relatively slowly and in a predictable manner compared to other types of data items of an electric vehicle. Data items related to SoC can therefore have medium priority, where the data items are not generally prioritized when bandwidth is limited, but still monitored on a regular basis.

A data item can be assigned a priority value in different ways. Different data items can be assigned priority values in different ways. A data item can be assigned a priority value by linking and/or cross referencing an index or other characteristic of the data item and/or a data item set with a list and/or set of priority values. For example, a data item including video data may include an index indicating that it is video data, based on which a priority value of this data item may be derived by comparing the index with a list of indices linked to priority values.

A data item can be assigned a priority value by embedding the priority value into the data item and/or a data item set. A data item can be provided with a priority value upon generation of the data item. For example, when a data item including video data is generated, said data item may also be assigned a priority value as metadata.

A data item can be assigned a priority value in a combination of ways. For example, a data item can include an embedded priority value and an index indicating what type of data is included. Said data item can then also be assigned a priority value by referencing a list, as explained above. If a priority value of all or some data items including a specific data type should be modified, then a data item with both an embedded priority value and an index can have its priority value modified and/or be referenced with a list.

In the example system illustrated in FIGURE 1, vehicle 10A will traverse route 101, and during this traversing, it will stop for re-charging at charging station 160. Furthermore, during the traversing of route 101 vehicle 10A will, for a time, be within coverage 131 of a cellular cell controlled by base station 130. A driving plan of vehicle 10A, together with knowledge of route 101 and coverage area 131, as well as information on connectivity options available at charging station 160, enable the generation of a set of future connectivity opportunities for vehicle 10A. These predicted future connectivity opportunities include a fixed connection at charging station 160 and a wireless connection when within coverage 131. As the planned route is known, a predicted time and a location when each connectivity opportunity will present itself may be predicted based on the route and schedule of the vehicle, and the coverage maps of various connectivity options, or a combined coverage map of plural connectivity options. Likewise, a duration of the connectivity opportunity may be calculated, for example from a length of route 101 which is within coverage 131 and a speed limit on that part of the route. Further, a predicted bandwidth of the connectivity opportunity may be known from characteristics of the connectivity type of the connectivity opportunity. For example, the fixed connectivity available at charging station 160 may have a duration of the estimated charging, and a high bandwidth typical of a fixed connection.

In other words, an apparatus may be configured to derive and obtain at least a part of a first set of future connectivity opportunities based on a configured route of the vehicle.

Likewise, vehicle 10B will traverse route 102, and during the traversing it will experience two connectivity opportunities via access points 150 and 140, in detail, when the vehicle is within coverage 151 and 141, respectively. The times when these connectivity opportunities will present themselves may be predicted from route 102 and the schedule according to which vehicle 10B is foreseen to traverse the route. Likewise, the durations of the connectivity opportunities may be estimated from the lengths of the parts of route 102 which lie within coverages 151 and 141, and the speed limits at these parts of the route. Alternatively to speed limits, the planned speed at which the vehicle is planned to proceed on these parts of the route may be used, in case it is less than the speed limit, for example.

Overall, for vehicles in the fleet, a set of future connectivity opportunities may thus be determined separately for each vehicle, each future connectivity opportunity being furnished with an estimated time when it is predicted to occur, and likewise a predicted duration and predicted bandwidth. From these, it may be estimated how much data it is predicted that the vehicle will be able to transmit during each future connectivity opportunity, roughly as the duration x the bandwidth, possible modified by a quality factor, such as 0,5 to allow for sub-optimal performance of the connection during the connectivity opportunity. The future connectivity opportunity may comprise the predicted quantity of data that may be transmitted during the connectivity opportunity.

A server computer, such as, for example, a cloud computing server computer, or a set of server computers, may be provided with the information necessary to determine the sets of future connectivity opportunities for each one of the vehicles in the fleet, or at least a subset of the vehicles in the fleet. This server, or servers, may be configured to decide, which data items the vehicles will transmit during which ones of the future connectivity opportunities. In other words, the server may produce a mapping from the set of data items in a vehicle to the set of future connectivity opportunities of this vehicle. The vehicle is thus commanded to provide specific ones of the data items during specific connectivity opportunities, as defined by the server computer. Computational aspects of the herein disclosed processes may be run in a cloud or grid computing solution.

The server may choose which data item, or data items, the vehicle is to transmit during a specific connectivity opportunity based on the priority of the data items. For example, in general higher-priority data items will be transmitted using earlier connectivity opportunities, and connectivity opportunities which provide a smaller quantity of data communication.

Data items which are large in size and/or of low priority may be buffered in the vehicle and transferred when a long-duration, high-bandwidth connectivity opportunity presents itself. An example of such a connectivity opportunity is the charging station 160, along route 101. It is also foreseen generally that as a vehicle reaches its destination, a large amount of data may be transferred as the vehicle has stopped moving, increasing bandwidth in also wireless connections.

In some embodiments, the server is configured to select data items which may be transmitted in their entirety for transmission during single connectivity opportunities. Thus smaller-sized data items may be selected for transmission during connectivity opportunities which provide only a small quantity of data communication. The reason for this is, that transmitting a small part of a large data item may provide no utility in case the system cannot act on the transmitted small part, but if a smaller data item is transmitted in its entirety, the system may be able to act on it. In some embodiments, higher-priority data items are caused to be smaller in size, to increase the likelihood that they can be transmitted in their entirety also during more fleeting connectivity opportunities. For example, data compression may be applied to these data items, and/or their contents may be scaled down or otherwise limited in quantity, to produce a smaller data item which nonetheless is actionable to the system. For example, a video stream can be compressed or reduced in data size in various ways. A video stream can be transmitted with a reduced resolution, such that the information is still intelligible for a remote operator while requiring less bandwidth. A video stream can have a reduced frame rate, such that fewer images are transmitted. A video stream can be compressed with a different compression rate and/or method, for example providing lower data sizes but with reduced fidelity. A level of compression and/or data size reduction can be determined based on a speed of a vehicle and/or its surroundings. For example, a vehicle moving at a slow speed in an empty parking lot with good visibility can transmit a video stream of lower resolution, frame rate, colour range and/or fidelity than a vehicle moving at a high speed on a busy motorway or a vehicle driving in a city center. Furthermore, different levels of compression can be used for a data item, the level of compression depending on the priority value of the data item and/or the quantity of data that can be transmitted during a future connectivity opportunity. For example, the system may command an autonomous vehicle to safely stop in case the data item contains information which indicates the vehicle has become unsafe. As another example of an actionable data item, in case the data item contains information indicating that the road surface has begun to form ice, the vehicle may be re-routed to a different route.

As an alternative to transmitting an entire data item during a single connectivity opportunity, the server may be configured to map a single data item to plural connectivity opportunities, for example two, such that the predicted data transfer capability of the plural connectivity opportunities together is at least as large as the data item. For example, the data item may be transmitted in part during a first connectivity opportunity, and then resumed when a second connectivity opportunity begins, for the rest of the data item to be transmitted.

A data item can be given a priority value based on its relevance to a continuous operation of a vehicle. A priority value may indicate what type of connectivity opportunity is required for the data item. For example, a video stream of the vehicle and/or its surroundings may be a data item that is required to be continuously transmitted to a remote operator and/or a remote controller. Such a data item can have a priority value, indicating that the data item must be transmittable at all times, or at least at a certain interval.

A data item may be mapped to one or more cellular connectivity opportunities. A cellular connectivity opportunity may be a 4G connection, a 5G connection, or any other type of cellular connection. For example, a video stream data item can be mapped to a 5G connectivity opportunity. Mapping a video stream data item to a 5G connectivity opportunity may be based on, for example, a vehicle entering a city area with good 5G connection. If a vehicle exits an area with good 5G connection, a video stream data item can be mapped to a 4G connectivity opportunity, as the priority value can indicate that a stable and/or continuous connection is required.

A data item that requires continuous transmission may be given a priority value that can indicate a preferred connectivity opportunity, such as one or more types of cellular connections. For example, a video or audio data stream can be mapped to always use or prefer a cellular connection, even if a different kind of wireless connection with higher bandwidth is available. A data item that may be mapped to always use or prefer a cellular connection can be telemetry data from a vehicle sensor, speed data, event information, certain types of troubleshooting data, or other types of data that need to be transmitted continuously.

A data item required for continuous operation of a vehicle can be given a priority value that can indicate that the data item can be transferred at any connectivity opportunity using any type of connection. For example, a data item can have a priority value indicating that it can be transmitted over a cellular and a non-cellular connection, depending on which connection is available and determined to be stable enough.

A data item that is not required for a continuous operation of a vehicle can be given a priority value that can indicate that the data item should always use or prefer to use a connectivity opportunity different from a cellular connection, or to only use a cellular connection if a certain bandwidth is available. Such a data item can be of a type used to perform more detailed troubleshooting and analysis of a vehicle, not required for continuous operation. Such data items can be of a type used for updating and developing algorithms and/or models used by a vehicle and/or a system. For example, such a data item may include one or more types of raw data from a vehicle. Such a data item can be raw or processed Lidar data, raw or processed camera data, and/or raw or processed radar data, for example. Such a data item may comprise satellite navigation data or other location data, inertial measurement unit, IMU, data or other equivalent data, battery data, steering data or powertrain data. For example, raw Lidar data can be used to update a clustering or image recognition model used by a vehicle, but said data does not need to be transmitted for the vehicle to be able to operate. Raw Lidar data can be given a priority value indicating that it should be transmitted at connectivity opportunities that do not use cellular connection, but instead use, for example, a local wireless hotspot, a wired transfer, or a physical transfer of a data storage device.

A data item may be mapped to a connectivity opportunity based on the size of data item. For example, a data item that is relatively large may have priority value allowing it to be transferred in several types of connectivity opportunities, such as cellular, wired, or physically removed. If the size of the data item is large, however, it may be beneficial to only map it to non-cellular connectivity opportunities, for example to avoid transmission issues. Furthermore, the size of the data item may influence how its priority value is determined.

In some embodiments, the vehicle, or the server, is configured to receive an event notification, and to modify the mapping of data items to connectivity opportunities as a response to the event notification. For example, in case traffic conditions change, an ongoing transmission of a low-urgency data item may be interrupted, and instead a high-resolution video feed may be transmitted instead, to help a remote operator to plan for the continuation of the trip. As another example, the event notification may be received from a meteorological service, indicating rain in the whereabouts of the vehicle, responsive to which the server may command the vehicle to transmit humidity measurements as a high priority at the current, or a next, connectivity opportunity. Yet further, the event notification may be an indication of a near miss, meaning that the vehicle was almost involved in an accident. Responsive to this, the server may command the vehicle to provide a high-resolution video feed, or even a virtual-reality feed, to a remote operator to allow him to assess if there is a remaining danger of accident and to see if the reason for the near miss can be discovered. In this context, using a dynamically selected future connectivity opportunity may comprise selecting the future connectivity opportunity as a response to the event notification, based on content of the event notification, such as a type of the notified event, for example.

An event notification may be an alarm event notification, and the data item selected based on the event notification may be a log file comprising information on control inputs activated in the vehicle. For example, control inputs may be one or more types of sensor data gathered by the vehicle during a time period leading up to and/or after the event notification was created. Control inputs may be steering, acceleration, braking, or any other type of vehicle control input provided by a controller or a remote operator, during a time period leading up to and/or after the event notification was created. Control inputs may be evaluation data provided to the vehicle by a subsystem of the vehicle or an external source, for example weather data. Control inputs may be any type of data that may be used to analyze the behaviour of the vehicle and/or the event that led to the alarm event notification, for example as described above with regard to event notifications

A data item mapped to a connectivity opportunity based on an event notification may be one or more data items related to one or more human occupants of the vehicle. For example, a human occupant may be a driver or a passenger of the vehicle. A data item can be related to the health or medical condition of a human occupant, for example being provided by a sensor that may be used to detect if an occupant is unconscious or sleeping, if the occupant is disoriented, suffers some type of medical emergency or has an impaired ability to operate the vehicle. A data item related to a human occupant may be provided when an event notification indicates for example a collision of the vehicle, rough driving of the vehicle, or human occupant detection and/or medical data.

Modifying mapping of a data item to a connectivity opportunity, for example responsive to an event notification, can include modifying what type of connection should be used or preferred. For example, in some cases raw Lidar data can normally not be transmitted over a cellular connection, but in response to an event indicating a possible mechanical fault or other error, some raw Lidar data can be deemed necessary for urgent troubleshooting and thus be given a modified priority value and mapping, such that it can be sent over a cellular connection. One or more data items that can normally not be transmitted over a cellular connection can be given a modified priority value and/or mapping in some conditions, such as upon an event, such that the one or more data items can be transmitted over a cellular connection.

Modifying mapping of a data item to a connectivity opportunity can include modifying a priority value of a data item based on a predicted bandwidth of a connectivity opportunity. For example, a general available bandwidth of a 4G or 5G connection can cover a wide range of bandwidths, where the actual available bandwidth can be dependent on multiple factors that may change continuously. If, for example, a predicted available bandwidth of a 4G or 5G connection for a particular connectivity opportunity and/or a particular duration can be known in more detail and/or with greater accuracy, a data item normally reserved for transfer over a wireless hotspot or a wired connect can be given an updated priority value such that it can be transmitted over the cellular connection during the particular connectivity opportunity and/or the particular duration. A predicted bandwidth can be the actual bandwidth predicted to be available. That is to say, the predicted bandwidth is not limited to just being related to a type of connection. For example, another vehicle may report a recent practically achieved bandwidth when using a connectivity opportunity which is predicted to soon become available.

In general, the server may be configured to command the vehicle to transmit, while moving, only data items with a priority which exceeds a priority threshold, and to transmit all data items with a priority less than the priority threshold when stopped, using a more stable and higher-bandwidth connection. Data item priority may be configured manually by humans, or it may be automatically assigned to the data item by the vehicle, or the server. For example, a sensor type may be assigned a priority value, which is inherited by data items comprising sensor data from sensors of this type. The sensor type priority values may be dynamically updated while the vehicle is moving, for example as a response to changing environmental conditions or specific events. For example, nightfall may cause the priority assigned to infra-red sensors to be increased.

In practice, many large data items are of a low priority and low urgency. For example, communication network coverage measurement data, collected to update maps of communication solution coverage areas, are not urgent, likewise lidar data to be used in updating high-resolution mapping data may be very large in size, but not of great urgency. Such data items may be stored in the vehicle which generated them, and transferred when a stable connection is available. For example, data items can be transferred by manned file transfer. For example, physical hard drives or solid-state drives are swapped from the vehicle and replaced with empty ones, to move the large data items to a server device for analysis.

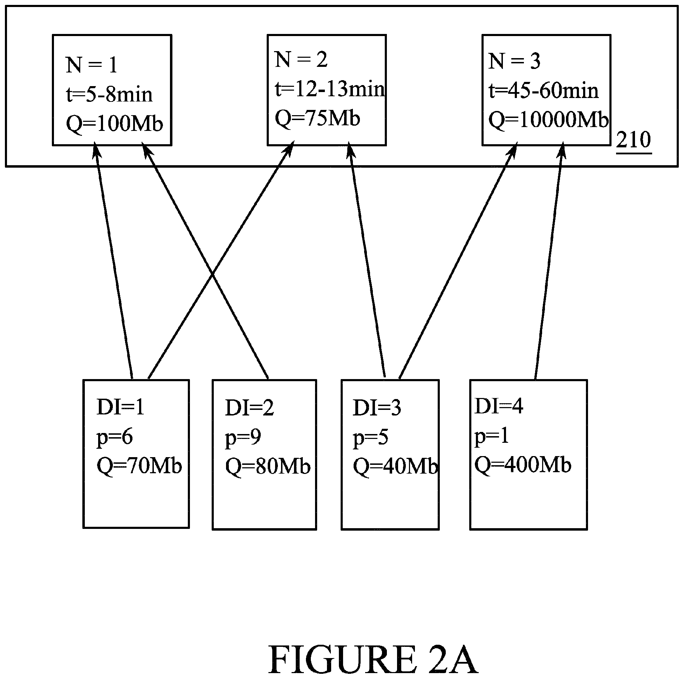

FIGURE 2A illustrates example connectivity opportunities and data items in accordance with at least some embodiments. In the upper part of the figure is a set of predicted future connectivity opportunities 210. This set comprises three predicted connectivity opportunities, named N=1, N=2 and N=3. These are predicted to take place at 5-8 minutes from the start of the route, 12-13 minutes from the start of the route, and finally 45-60 minutes from the start of the route. These connectivity opportunities are predicted to present an opportunity of transferring 100 megabytes, MB , 75 MB and 10000 MB , respectively. The first two may be wireless, and the third one may correspond to a charging break with a high-bandwidth connection, for example.

In the lower part of the figure, there are data items stored in the vehicle. At the beginning of traversing a route, some data items may already be present while others may be generated during the drive, or may be predicted to be generated during the drive. The server may be provided information on the data items, for example during the drive, and the server may obtain information on the set of predicted future connectivity opportunities 210.

The data items are assigned identities DI=1, DI=2, DI=3 and DI=4. These data items have priorities p=6, p=9, p=5 and p=1, respectively, with higher numbers indicating higher priorities. These data items are of size, Q, 70 MB, 80 MB, 40 MB and 400 MB, respectively.

The arrows depict graphically the mapping of data items to connectivity opportunities. This mapping may be determined by the server, for example, based on the data item sizes, connectivity opportunity timings and predicted communication capacities, and the data item priorities. In detail, in the example of FIGURE 2A, the highest-priority data item DI=2 is transmitted from the vehicle at the earliest connectivity opportunity N=1. It fits completely into this connectivity opportunity, such that the connectivity opportunity still has an estimated 20Mb of communication capacity remaining after transferring data item DI=2. This is used to transfer a part, 20 MB, of the second-highest priority data item DI=1, of which the remainder, 50 MB, is transmitted during connectivity opportunity N=2, the second-earliest connectivity opportunity. After this, connectivity opportunity N=2 has 25 MB of estimated capacity left, to which is assigned the next-highest priority data item DI=3, of which 15 MB remains after 25 MB is transmitted during connectivity opportunity N=2. The remaining 15 MB of data item DI=3 is to be transmitted during the last connectivity opportunity N=3. Likewise, the lowest-priority, large data item DI=4 is communicated during the last connectivity opportunity N=3.

Acting in this manner, the highest-priority data items may be transmitted soonest. In some embodiments, a data item is not started to be transmitted during a next connectivity opportunity in case it is of a type which is not actionable unless communicated in its entirety, and it may be transmitted in its entirety in the communication opportunity which is follows immediately in the sequence of communication opportunities after the next one (there may be breaks in time between communication opportunities, as indicated in FIGURE 2A and schematically also in FIGURE 1). In this case, a next-highest priority data item may be transmitted instead to allow the system to act on a data item sooner, even if it is not the highest-priority data item remaining.

In detail, an apparatus may be configured to select the at least one from among the first set of data items and the at least one connectivity opportunity from among the first set of future connectivity opportunities such that for a selected connectivity opportunity occurring soonest, the highest-priority data item from the first set of data items is selected that can be transmitted in its entirety during a duration of the selected connectivity opportunity occurring soonest, taking into account the bandwidth of the soonest-occurring connectivity opportunity. Further, a mapping module may be configured to map the data items to be transmitted to the connectivity opportunities based on the size of the data items.

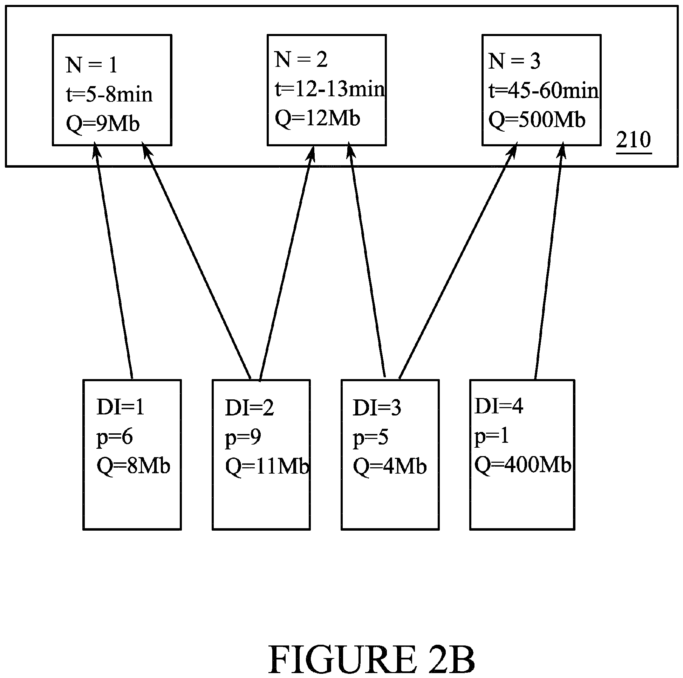

FIGURE 2B illustrates example connectivity opportunities and data items in accordance with at least some embodiments. The situation in FIGURE 2B resembles that in FIGURE 2A, with different numerical values. However, in FIGURE 2B, the highest-priority data item DI=2 does not fit in the earliest connectivity opportunity and in FIGURE 2B, the data items DI=1 and DI=2 are of a type, or types, which the system can only act on after they have been received in their entirety. In this situation, in this embodiment, the server commands the vehicle to transmit data item DI=1 during connectivity opportunity N=1. The highest-priority data item DI=2 is partly transmitted during connectivity opportunity N=1 and mostly during connectivity opportunity N=2. This solution obtains the benefit that the system is enabled to act on a higher-priority data item already after the first connectivity opportunity N=1, after 8 minutes from the start of the drive, even if this isn't strictly the highest-priority data item.

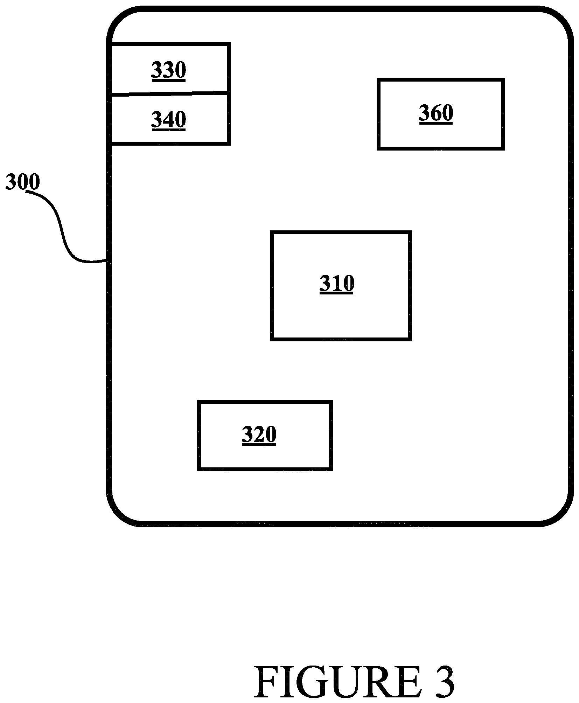

FIGURE 3 illustrates an example apparatus capable of supporting at least some embodiments of the present invention. Illustrated is device 300, which may comprise, for example, the server configured to obtain the sets of future connectivity opportunities or, in applicable parts, a device in a vehicle. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as storing, obtaining and commanding. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate configure data item uploading parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3. In some embodiments, device 300 lacks at least one device described above.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention. The device may comprise further modules configured to perform tasks, such modules may comprise hardware, software or a combination of hardware and software.

According to an example, there is an apparatus comprising at least one processing core and at least one memory in communication with the at least one processing core. The apparatus can have the same capabilities as the apparatus described previously in the application, and vice versa. The apparatuses can be the same apparatus, but formulated differently in terms of what the apparatus is configured to do and what the modules of the apparatus are configured to do.

The at least one memory can store instructions that can be executed by the at least one processing core, such that the apparatus can be caused to store information of a first set of data items stored in a first vehicle.

The data items of the first set can each be assigned a respective priority value.

The at least one memory can store instructions that can be executed by the at least one processing core, such that the apparatus can be caused to obtain, for a first vehicle, a first set of future connectivity opportunities. A future connectivity opportunity can comprise a future time and a location that the future connectivity opportunity is predicted to occur at.

The at least one memory can store instructions that can be executed by the at least one processing core, such that the apparatus can be caused to send instructions to a vehicle application of a first vehicle. The instructions can instruct the first vehicle to transmit at least one from among a first set of data items during at least one from among a first set of future connectivity opportunities.

A vehicle application of a first vehicle may be a computer-implemented application of the first vehicle. A vehicle application of a first vehicle can allow the apparatus to send information and signals to the first vehicle. A vehicle application of a first vehicle may allow the first vehicle to send information and signals apparatus. A vehicle application of a first vehicle may be part of an autonomous vehicle. A vehicle application of a first vehicle may be included in an autonomous vehicle system. A vehicle application of a first vehicle may be part of remote-operated vehicle. A vehicle application of a first vehicle may be included in a remote-operated vehicle system. A vehicle application of a first vehicle may be part of a vehicle operated by a driver. A vehicle application of a first vehicle may be part of a system for a vehicle operated by a driver. A driver can be situated in a driver's cab of a vehicle. A vehicle application of a first vehicle may be part of an electric vehicle. A vehicle application of a first vehicle may be included in an electric vehicle system.

The apparatus can include a mapping module. The mapping module can be in communication with at least one processing core and at least one memory. The mapping module can be configured to map data items to be transmitted to connectivity opportunities based at least in part on priority values assigned to the data items.

The at least one memory can include instructions that when executed cause the apparatus to select the at least one from among a first set of data items and at least one connectivity opportunity from among a first set of future connectivity opportunities such that for a selected connectivity opportunity occurring soonest, the highest-priority data item from the first set of data items is selected that can be transmitted in its entirety during a duration of the selected connectivity opportunity occurring soonest. The selection may take into account the bandwidth of the soonest-occurring connectivity opportunity.

The at least one memory can include instructions that when executed cause the apparatus to send instructions to the vehicle application of the first vehicle to transmit a specific data item from the first set of data items such that a first part of the specific data item is transmitted during one future connectivity opportunity and a second part of the specific data item is transmitted during another future connectivity opportunity.

The at least one memory can include instructions that when executed cause the apparatus to derive and obtain at least a part of a first set of future connectivity opportunities based on a configured route of the first vehicle.

The apparatus can include an event notification module. The event notification module can be in communication with at least one processing core and at least one memory. The event notification module may be configured to receive an event notification from a first vehicle. The event notification module may be configured to determine a data item from among a first set of data items that should be transmitted using a dynamically selected future connectivity opportunity from among the first set of future connectivity opportunities or a currently active connectivity opportunity. The event notification module may be configured to send instructions to the vehicle application of the first vehicle to transmit the determined data accordingly.

An event notification can be an alarm event notification. A data item selected based on an event notification, such as an alarm event notification, may be a log file. A log file can comprise information of control inputs activated in a first vehicle. A log file can be as previously described in this disclosure. Control inputs may be as previously described in this disclosure.

Priority values may be assigned to each of the data items included in a set of priority values, where each priority value in the set of priority values is associated with one or more types of connectivity opportunities, such that the mapping module is configured to map the data items to individual types of connectivity opportunities based at least in part on their respective priority value.

The mapping module may be configured to map data items to be transmitted to the connectivity opportunities based on the respective sizes of the data items.

The mapping module may be configured to map a combination of data items for a connectivity opportunity. Two or more data items can be transmitted as part or all of a combined data item or as data items that are associated with each other. Two or more data items may linked as pairs, triples, or other groups, in order to form groups of data items that can more closely match the available data transmission size of a connectivity opportunity. The mapping module may be configured to dynamically link data sets into groups based on a first set of connectivity opportunities.

The mapping module may be configured to link data sets to transfer as much data as soon as possible. The mapping module may link data sets to transfer as much data of one or more specific priority values as soon as possible. The mapping module may be configured to link data sets to transfer data as evenly as possible along a route.

When linking data sets, the mapping module can take the priority values assigned to the data items into account. For example, data items with a certain priority value can be exempt from being linked with other data items with the same priority value or a priority value above a certain threshold. In this way, data items of particular importance may be divided and not transmitted at the same time for redundancy reasons, for example when there is a high possibility of interrupted communications.

Data items may be exempt from being linked with other data items with an assigned priority value below a certain threshold. In this way, data items of particular importance can be separated from less important data items, for example if an available transmission capacity has a small data size margin or is only open for a short window of time.

The apparatus may include a compression determination module. The compression determination module can be in communication with the at least one processing core and the at least one memory. The compression determination module can be configured to determine a level of compression of a data item based on a priority value assigned to the data item.

The compression determination module may be configured to determine a type of compression of a data item based on a priority value of the data item. For example, data items of a certain priority value may be considered to only be allowed a small amount of, or no, compression. The priority value may indicate that the data item is too important to compress, or that it cannot be compressed.

The compression determination module may be configured to determine a type of compression of a data item based on characteristics of future connectivity opportunities. For example, if the compression determination module may receive information regarding a specific future connectivity opportunity indicating that the connectivity opportunity is unstable or unable to guarantee a certain level of maximum transmission loss, and the compression determination module may responsive to this select a level of compression that takes the potential data loss during transmission into account.

A characteristic of a connectivity opportunity can be the quantity of data that can be transmitted. further, additionally or alternatively a characteristic of a connectivity opportunity may be the predictability of a connectivity opportunity, for example how likely a received or estimated data quantity is to be correct in practice. Further, stability of a connectivity opportunity, for example how much transmission speeds fluctuate, may be comprised in characteristics of a connectivity opportunity. A quality of a connectivity opportunity, for example how lossy the connection is or how much of the transmitted data can be corrupted, may also characterize the connectivity opportunity.

The level of compression may be determined based on both a priority value of a data item and characteristics of a connectivity opportunity. The compression determination module may thus be configured to determine a suitable level of compression that satisfies both a priority value condition and a connectivity opportunity condition.

The compression determination module may be configured to send instructions to a vehicle application of a first vehicle instructing the first vehicle to compress a data item before transmitting it.

The apparatus may include a driving behaviour module. The driving behaviour module may be in communication with the at least one processing core and the at least one memory. The driving behaviour module may be configured to determine modifications of a driving behaviour of a first vehicle based on a first set of future connectivity opportunities. The driving behaviour module may be configured to send instructions on the modifications to a vehicle application of a first vehicle.

Driving behaviour can be for example speed, acceleration, braking, cornering speed, cornering radius. For example, if a connectivity opportunity is too brief for a first vehicle to transmit one or more specific data sets, the driving behaviour module can provide instructions to the first vehicle to slow down by a determined speed modification such that the data items in question can be transmitted during the connectivity opportunity. On the other hand, if there is some margin of unused transmission time during a connectivity opportunity, for example due to no other data items being allowed or possible to transmit, the driving behaviour module can provide instructions to the first vehicle to speed up.

Depending on the type or characteristics of a connectivity opportunity, the driving behaviour module may provide instructions to a first vehicle. For example, if the transmission requires a line-of-sight be maintained between a first vehicle and a node, cell tower, or other communication element, or if the transmission can be impacted by fast position changes, the driving behaviour module can instruct the first vehicle not to accelerate, brake, or corner too aggressively.

The driving behaviour module, or another module of the apparatus, may be configured to update the following connectivity opportunities if these are impacted by a speedup, slowing down, or any other driving behaviour modifications. The apparatus, or one of its modules, may be configured to optimize or balance a potential driving behaviour modification with respect to a transport assignment or other requirements.

The apparatus may include a routing module. The routing module, where present, can be in communication with the at least one processing core and the at least one memory. The routing module may be configured to determine modifications of a route of a first vehicle based at least in part on a first set of future connectivity opportunities. The routing module may be configured to send instructions on the route modifications to a vehicle application of a first vehicle.

Analogously to the driving behaviour module, the routing module may modify a path to be driven by a first vehicle, or cause the path to be modified, so as to maintain a connection during a connectivity opportunity.

The routing module, or another module of the apparatus, may be configured to update the future connectivity opportunities if these are impacted by a modified route of a first vehicle. The apparatus, or one of its modules, may be configured to optimize or balance a potential route modification with respect to a transport assignment or other requirements. For example, a route modification may be performed to enhance connectivity if it does not cause a delay which would cause the vehicle to miss its defined schedule.

The routing module may be configured to create or modify a route of a first vehicle. The routing module may continuously update a route. Continuously may refer to periodic updating, for example every ten seconds, every minute or every five minutes. Periodic updating may have a fixed periodicity with periods of equal length between updates, for example. For example, before obtaining a first set of connectivity opportunities, the routing module can create a route based on a transport assignment. When a first set of connectivity opportunities is obtained, these can be associated with respective segments or parts of the route. Based on the obtained first set of connectivity opportunities, the routing module may update the route to better match the first set of connectivity opportunities. The routing module may use information provided by any of the other modules of the apparatus for this function. The routing module may also provide information to other modules of the apparatus.

The apparatus may include a characteristic prediction module. The characteristic prediction module can be in communication with the at least one processing core and the at least one memory. The characteristic prediction module may provide an output that can be used when obtaining the first set of connectivity opportunities. Output from the characteristic prediction module may relate to a route or part of a route of a first vehicle. Output from the characteristic prediction module may relate to an area of the first vehicle.

The characteristic prediction module may be configured to predict characteristics of a connectivity opportunity. A predicted characteristic can be bandwidth, for example. A predicted characteristic may comprise capabilities of a connectivity opportunity, for example. A predicted characteristic may be availability of beamforming. A predicted characteristic may be a number of clients using the same resources of the connectivity opportunity. A predicted characteristic may be a number of vehicles using the same resources of the connectivity opportunity. A predicted characteristic may be a number of autonomous vehicles using the same resources of the connectivity opportunity. A predicted characteristic may be a number of remote-operated vehicles using the same resources of the connectivity opportunity. A predicted characteristic may be estimating the possibility of a traffic accident, traffic jam, or another situation occurring along a route of a first vehicle that can influence the capabilities of a connectivity opportunity, and predict the capabilities, such as data transmission capacity, of the connectivity opportunity accordingly.

For example, the characteristic prediction module may be configured to predict that beamforming is available in a road segment of a connectivity opportunity, based on historical data or live data, for example. The characteristic prediction module may predict the limitations of the beamforming connection in the road segment, for example estimating a maximum movement speed allowed for sustaining a suitable connection. The predicted limitations may then be output from the characteristic prediction module and used by the apparatus or its modules, for example being used by the driving behaviour module or the routing module.

The characteristic prediction module may be configured to predict characteristics of a connectivity opportunity based on historical data. The characteristic prediction module may predict characteristics of a connectivity opportunity based on live data. Live data can be received from a traffic service. Live data may be received from other vehicles. The historical data or live data can relate to the specific vehicle. The historical data or live data may relate to one or more different vehicles The characteristic prediction module may predict characteristics of a connectivity opportunity based on weather data. The characteristic prediction module may receive multiple different types of data and predict the capabilities of a connectivity opportunity. The characteristic prediction module may be continuously updated and modified based on the accuracy of predicted capabilities of connectivity opportunities. Continuously updating may refer to periodic updating, for example every ten seconds, every minute or every five minutes. Periodic updating may have a fixed periodicity with periods of equal length between updates, for example.

Data from one or more other vehicles may include geographical position data, speed data, transport assignment data, start time data, delivery time data, checkpoint time or location data, or other types of information of the one or more other vehicles, for example.

The apparatus may include a nominal data transmission need prediction module. The nominal data transmission need prediction module can be in communication with the at least one processing core and the at least one memory. The nominal data transmission need prediction module may be configured to receive route information of at least one additional vehicle and predict and output a nominal data transmission need of the at least one additional vehicle at one or more of the times and locations corresponding to a first set of connectivity opportunities. The output of a nominal data transmission need prediction module may be used when obtaining a first set of connectivity opportunities, such that the apparatus is configured to take this output into account when obtaining a first set of connectivity opportunities.

Nominal data transmission need maybe the amount of data normally required to be transmitted for operating functionalities of an additional vehicle. Nominal data transmission need mayinclude essential data transmission need, for example data that must be transmitted for an additional vehicle to be able to operate without going into a failsafe mode. It may include essential transmission data need together with other data transmissions that are normally transmitted during operation, but that are not essential for an additional vehicle to operate. For example, a high-quality video feed may be normally transmitted by an additional vehicle. On rural roads with few obstacles, other vehicles, or pedestrians, a high-quality video feed may not be essential but normally used anyway. On city roads, the high quality video feed can be an essential data transmission need.

Nominal data transmission need maybe predicted for more than one additional vehicle. For example, at a busy intersection street where there are many vehicles sharing the same communication resources, the nominal data transmission need prediction module can estimate how much data capacity is likely to be used by the vehicles.

The nominal data transmission need prediction module may be configured to predict a data transmission need of at least additional vehicle based on historical data or live data. The historical data or live data may relate to the specific additional vehicle. The historical data or live data may relate to one or more different vehicles. It may be predicted in a similar way to how the characteristic prediction module is described to predict characteristics of a connectivity opportunity. For example, it can be predicted that an additional vehicle will require a greater data transmission capacity near a city intersection than a rural long straight.

Data from one or more other or additional vehicles may include geographical position data, speed data, transport assignment data, start time data, delivery time data, checkpoint time or location data, or other types of information of the one or more other vehicles.

The output of the nominal data transmission need prediction module may be used when obtaining a first set of connectivity opportunities, for example when determining the available data transmission capacity. The output may also be used by other modules of the apparatus. The output of the nominal data transmission need prediction module may be used by the driving behaviour module, for example to increase the time available for data transmissions. The output of the nominal data transmission need prediction module may be used by the routing module, for example to reroute the vehicle to a route with better connection capabilities. The output may be used by the mapping module, for example to map only low-priority data items in connectivity opportunities where there is a large predicted amount of data transmission used by other vehicles. The output may be used by the characteristic prediction module, for example to help in predicting an available data transmission capacity.

The apparatus may include a nominal data transmission need receiving module. The nominal data transmission need receiving module can be in communication with the at least one processing core and the at least one memory. The nominal data transmission need receiving module may be configured to receive route information of at least one additional vehicle and receive and output a nominal data transmission need of the at least one additional vehicle at one or more of the times and locations corresponding to a first set of connectivity opportunities.

The nominal data transmission need receiving module may be configured to function in a similar way to the nominal data transmission need prediction module, with a difference being that the nominal data transmission need is not predicted by the module but instead received. The nominal data transmission need may be received from an additional vehicle that reports its nominal data transmission need, or to a traffic planner reporting the nominal data transmission need of one or more additional vehicles. The nominal data may be both essential data need and optional data need, the optional data need including data that would be good to transmit but not essential.

Data from one or more other or additional vehicles may include geographical position data, speed data, transport assignment data, start time data, delivery time data, checkpoint time or location data, or other types of information of the one or more other vehicles.

Similar to the description of the nominal data transmission need prediction module, the output of the nominal data transmission need receiving module may be used by apparatus and its other modules.

The apparatus may include a nominal data transmission need transmitting module. The nominal data transmission need transmitting module can be in communication with the at least one processing core and the at least one memory. The nominal data transmission need transmitting module may be configured to obtain a nominal data transmission need of a first vehicle at one or more of the times and locations corresponding to a first set of connectivity opportunities. The nominal data transmission need transmitting module may be configured to transmit information of a nominal data transmission need of a first vehicle to at least one other vehicle. The nominal data transmission need transmitting module may be configured to transmit information of a nominal data transmission need of a first vehicle to at least one other vehicle planning apparatus.

Data from a first vehicle may include geographical position data, speed data, transport assignment data, start time data, delivery time data, checkpoint time or location data, or other types of information of the first vehicle.

The nominal data transmission need transmitting module may thus provide information of the nominal data transmission need of a first vehicle to other entities in a traffic system. The nominal data transmission need can be the same types of data as described with regard to the nominal data transmission need prediction module and the nominal data transmission need receiving module.

For example, the apparatus may be configured to, for example via the nominal data transmission need transmitting module, inform other vehicles or transport planning apparatuses that a first vehicle will require a minimum data transmission capacity at a certain connectivity opportunity or at a certain road segment.

The nominal data transmission need transmitting module may be configured to transmit information of essential and optional planned data items. Optional data items can be data items which would be good to transmit, but not essential.

The nominal data transmission need transmitting module may thus be configured to provide a way of informing other vehicles and traffic systems of certain road segments, route segments, or telecommunications cells or nodes that the first vehicle is going to transmit a certain amount of data.

The apparatus may yet further include an event prediction module. The event prediction module, where present, may be in communication with the at least one processing core and the at least one memory. The event prediction module may be configured to receive route information of a first vehicle. The event prediction module may be configured to predict or obtain information of a predicted event of a future route segment of at least one connectivity opportunity. The event prediction module may be configured to determine and output a minimum data transmission capacity that should be available at a future route segment of at least one connectivity opportunity. The size of a minimum data transmission capacity may be based on a predicted event. Obtaining a first set of connectivity opportunities may be based on an output from the event prediction module.

An event may be of the type described previously in this application. For example, an event can be a predicted traffic accident or a traffic jam that can occur in an upcoming road segment of a route of a first vehicle. The prediction may include a likelihood that the first vehicle will need to pass through a road segment where such an event has occurred, and provide a minimum margin of data transmission capacity that should be available. Thereby, even if there is an event , there will still be sufficient data transmission capacity in the connectivity opportunity.

A prediction of an event may be based on the actual occurrence of an event at an upcoming road segment, wherein the module predicts the likelihood that the event will still be occurring by the time the first vehicle reaches the road segment. The module may also be configured to predict the likelihood that transmission capacity will be limited for a certain time on the road segment after the event has occurred and been dealt with.

Like other modules, the event prediction module may be configured to provide output to and receive input from other modules of the apparatus.

Sending instructions to a vehicle application of a first vehicle may include sending instructions configured to instruct a vehicle with autonomous capabilities. Thereby, the apparatus may be configured to interact with and influence autonomous vehicles. A vehicle application module can be part of a computer system of an autonomous vehicle, the computer system being able to instruct or operate the autonomous vehicle.

Sending instructions to a vehicle application of a first vehicle may include sending instructions configured to be presented to a remote operator of a vehicle. The instructions can be configured to be presented by means available at a remote operation station, such as a display. Thereby, the apparatus may be configured to interact with and influence remote-operated vehicles.

Sending instructions to a vehicle application of a first vehicle may include sending instructions configured to be presented to a driver of a vehicle. The instructions can be configured to be presented by means available to a driver of a vehicle, such as one or more of a display in driver's cab, a phone, or any other device. Thereby, the apparatus may be configured to interact with and influence driver-operated vehicles.

The apparatus may be capable of sending instructions to a vehicle application of more than one of the vehicle types above, such as all of the types or any combination of types.

The at least one memory may be configured to store instructions that can be executed by the at least one processing core, such that the apparatus can be caused to store information of a second set of data items stored in a second vehicle. The data items of the second set can each be assigned a respective priority value.

The at least one memory can store instructions that can be executed by the at least one processing core, such that the apparatus may be caused to obtain, for a second vehicle, a second set of future connectivity opportunities.

The at least one memory can store instructions that can be executed by the at least one processing core, such that the apparatus can be caused to send instructions to a vehicle application of the second vehicle. The instructions may instruct the second vehicle to transmit at least one from among the second set of data items during at least one from among the second set of future connectivity opportunities.

In this way, the apparatus may be configured to interact with and influence more than one vehicle. The apparatus and its modules can have the same capabilities and functions for the second vehicle as described for the first vehicle. The apparatus and its modules can take information from both a first vehicle and a second vehicle, and any further vehicles in connection with the apparatus, into account when performing their respective functions.

For example, the mapping module may be configured to map data items for a first vehicle and data items for a second vehicle at an overlapping connectivity opportunity. The mapping module may be configured to use the priority values assigned to the data items to determine which data items should be prioritized. The mapping module may optimize mapping for the sum of vehicles, for example leading to no single vehicle having an individual optimal mapping of data items while the mapping for a system including all vehicles is optimized . The other modules and functions of the apparatus may work in a similar way, optimizing and balancing for multiple vehicles rather than just one.

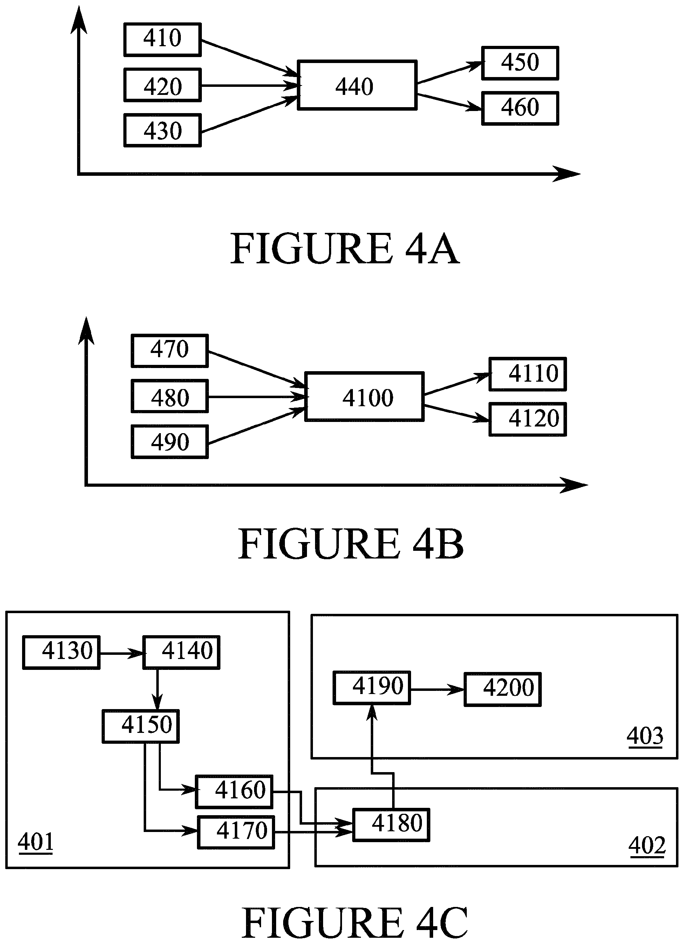

FIGURE 4A illustrates operation of a connectivity consolidation service. The horizontal axis denotes the direction of data traffic, from left to right, and the vertical axis corresponds to priority of data, with the priority increasing from the bottom toward the top.

The consolidation service 440 receives data items from a video stream source 410, a reporting subsystem 420 and a logging subsystem 430, each of a vehicle. Of these, a video stream generated by video sensor 410 has the highest priority as it is highest along the vertical axis. The consolidation service 440 consolidates the data items to generate a single egress point for data items of differing priority levels, and provides at least a part of the data items to an operator terminal 450 and at least a part of the data items to a cloud service, such as a server 460. The parts provided to operator terminal 450 and to server 460 need not be the same parts. In some embodiments, all the data items are provided to both operator terminal 450 and to server 460. As indicated in the figure, traffic from consolidation service 440 to operator terminal 450 is of a higher priority than traffic from consolidation service 440 to server 460.

FIGURE 4B illustrates operation of a connectivity consolidation service. The horizontal axis and the vertical axis are arranged as was the case in FIGURE 4A. The consolidation service 4100 receives data items, via an operator terminal, from a operator presence system 470, a control subsystem 480 and a logging system 490, each of a same vehicle. Of these, operator presence data generated by operator presence subsystem 470 has the highest priority as it is highest along the vertical axis. The consolidation service 4100 consolidates the data items to generate a single egress point for data items of differing priority levels, and provides at least a part of the data items to vehicle 4110 and at least a part of the data items to a cloud service, such as a server 4120. The parts provided to vehicle 4110 and to server 4120 need not be the same parts. In some embodiments, all the data items are provided to both vehicle 4110 and to server 4120. As indicated in the figure, traffic from consolidation service 4100 to vehicle 4110 is of a higher priority than traffic from consolidation service 440 to server 4120.

FIGURE 4C illustrates architecture of a connectivity consolidation service. On the left, vehicle or terminal 401 comprises a source of prioritized data 4130, which is assigned bandwidth from future connectivity opportunities in allocation service 4140. The data stream, comprising plural data items of differing priorities, is mapped to connectivity opportunities and, optionally, different communication technologies in partitioning service 4150, from where the data stream is provided to connectivity clients 4160 and 4170. The connectivity clients 4160, 4170 may transmit the data via their respective connectivity hardware, such as transceivers configured to communicate using a wired or wireless communication technology. The assigning of bandwidth and/or the mapping of data items of the data stream to connectivity opportunities may take place under direction of a server distinct from the vehicle or terminal 401, for example.

The data is transmitted via e.g. a cloud arrangement 402, via a connectivity mesh 4180, which comprises the aggregate of communication devices and technologies used in the set of connectivity opportunities defined for the vehicle. These may include base stations, access point, wire-line networks and communications ports, for example. A server 403, or cloud processing mechanism comprising plural servers 403, receives the data from connectivity mesh 4180 in a reassembly service 4190, from which the data items are provided to data consumers 4200. The data consumers may act on the data items, for example as described herein above.

The reassembly service 4190 may provide to allocation service 4140 bandwidth estimates that relate to connectivity opportunities, so that the quantities of data that are likely transferrable during specific ones of predicted future connectivity opportunities may be more accurately estimated. Reassembly service 4190 may derive these bandwidth estimates from actual data quantities successfully transferred using the connectivity solutions in question in the recent past.

A video stream may include a data item relating to audio, such as an audio part of the video stream. A video stream may include a data item related to operation of a vehicle, such as a telemetry data item. A video stream may include one or more data items required for continuous operation of a vehicle.

A reporting subsystem may be configured to provide data items such as, for example, event data and/or telematics data. Event data may include data indicating an event such as a weather report, or the vehicle reporting a near miss. Telematics data may include data from vehicle sensors and/or other data indicating the state of the vehicle. Telematics data can be used to update and/or optimize a route and/or a behaviour of a vehicle.

A logging subsystem (430) can provide data items related to troubleshooting. Data items used for troubleshooting may include different types of sensor data and information. Different data items used for troubleshooting may be of different priorities, for example indicated by respective priority values. Data items for troubleshooting may be given updated priority values, for example if an event is detected and requires analysis.

A logging subsystem 430 can provide data items that can be of the type used for updating and developing algorithms and/or models used by a vehicle and/or a system. For example, such a data item can include one or more types of raw data from a vehicle. A data item can be raw or processed Lidar data, raw or processed camera data, and/or raw or processed radar data. A data item can comprise satellite positioning data or other location data, IMU data or other equivalent data, battery data, steering data or powertrain data. For example, raw Lidar data can be used to update a clustering or image recognition model used by a vehicle, but said data does not need to be transmitted for the vehicle to be able to operate.

In an example, one or more data items specified to be provided by a reporting subsystem can be provided by a logging subsystem. Likewise, one or more data items specified to be provided by a logging subsystem can be provided by a reporting subsystem. The terms video stream, reporting subsystem, and logging subsystem can be considered to represent an example of a division of data items of different priorities and/or priority values. A data item can be given a different priority and/or priority value upon detection of an event. For example, a data item normally affiliated with a reporting subsystem or a logging subsystem can be modified to be affiliated with a video stream, if the information is requested and/or determined to be required for the continuous operation of the vehicle.

Operator presence data can include data that can be used for ensuring safety and/or security properties.

A control subsystem can provide data items that can include, for example, approval for a vehicle to proceed after a planned stop, or one or more signals needed to interact with a device at a loading bay of a terminal. A control subsystem can provide data items that can include signals to influence a vehicle.

A logging system (490) can provide data items including logged data provided at the remote station. A logging system (490) can provide data items including a recording of an event, for example an operator authentication event or an operator selecting a task for a vehicle to execute.

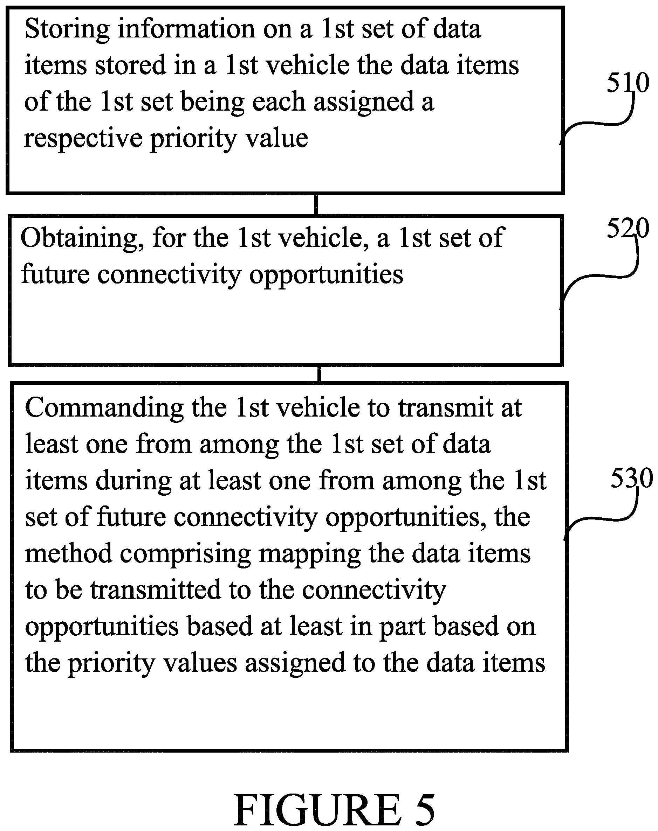

FIGURE 5 is a flow graph of a method in accordance with at least some embodiments of the present invention. The phases of the illustrated method may be performed in the server, for example, or in a control device configured to control the functioning thereof, when installed therein.

Phase 510 comprises storing information on a first set of data items stored in a first vehicle the data items of the first set being each assigned a respective priority value. Phase 520 comprises obtaining, for the first vehicle, a first set of future connectivity opportunities, each future connectivity opportunity comprising a future time that the future connectivity opportunity is predicted to occur at, a duration and a bandwidth. Finally, phase 530 comprises commanding the first vehicle to transmit at least one from among the first set of data items during at least one from among the first set of future connectivity opportunities, the method comprising mapping the data items to be transmitted to the connectivity opportunities based at least in part on the priority values assigned to the data items.

In some embodiments, in addition to the first set of data items stored in the first vehicle there is also a second set of data items stored in a second vehicle, the data items of the second set of data items being each assigned a respective priority value. In these embodiments, phase 520 further comprises obtaining, for the second vehicle, a second set of future connectivity opportunities, and phase 530 further comprises commanding the second vehicle to transmit at least one from among the second set of data items during at least one from among the second set of future connectivity opportunities. For the data items of the second vehicle, data items are mapped to connectivity opportunities based at least in part on the priority values assigned to the data items of the second set of data items. A consolidation service may be provided, as described herein above, to provide a single egress point for the data items of the first and second set of data items.

The consolidation service described herein may be used together with the system, apparatus and/or method relating to data item mapping based on priority values. For example, the consolidation service may provide a common, single egress point for different data items, the data items being mapped based on a respective priority value. Transfer of data items via the consolidation service may also be based on any of the other methods described herein for data item mapping, suitable for this purpose. In one example, the data items transmitted via the consolidation service may be of the same type as the data items mapped based on priority values according to the system described herein above. In one example, the data items transmitted via the consolidation service may be of a different type from the type of data items mapped based on priority values according to the previously explained system. In one embodiment, some of the data items transmitted via the consolidation service are of the same type as the data items mapped based on priority values according to the previously explained system, and some are different from the type of data items mapped based on priority values.

According to one example, the consolidation service may be arranged to be used to transfer data items that are mapped based on a respective priority value or any other mapping method as described herein, as well as other data items that have not been actively mapped according to a mapping method as described herein above.

In one example, the consolidation service may be agnostic as to whether or not a data item has been mapped based on priority or not. In this example, mapping and provisioning of data items to the consolidation service may be performed by another device or module. A benefit of this configuration is that the consolidation service can be of a more simple construction and configuration, reducing the need for complex calculations to be performed by a processor or other control unit linked to the operation of the consolidation service. The consolidation service may be separated from the mapping system, which may prevent a fault in one system from spreading to or affecting the other. This may also lead to more secure and stable operation of the consolidation service, as there may be fewer possibilities of errors and other faults.

In one example, the consolidation service may be configured to take mapping of a data item based on a respective priority value or any other mapping method as described herein into account. In one example, a processor or other control unit linked to the operation of the consolidation service may be at least partially used in mapping the data items to be transferred. One benefit of linking the consolidation service with the mapping system, for example as described above, is that communication between the different systems may be simplified and performed faster, as the necessary information regarding the order of transmitting data items can be accessed by both systems. This may provide a more streamlined information flow with fewer transmission steps, leading to fewer opportunities for random errors or other faults to occur.

The consolidation service may be configured to check a priority value of a received data item and cross-reference this with a reference priority value for the data item type. The consolidation service may update the reference priority value based on the priority value of the data item. The reference priority value may be a proprietary reference priority value. The update may be configured to remain indefinitely until updated again, or to be reset after a predetermined time. The consolidation service may be configured to alert the mapping system if a priority value of a received data item deviates more than a predetermined threshold from a proprietary reference priority value for the same data item type.

The consolidation service may comprise one or more processors or control units, for example as previously described for the system and apparatus for mapping data items based on a respective priority value. The consolidation service may comprise one or more memories or storage devices for storing instructions that are executable by one or more processors or control units of the consolidation service, for example as previously described for the system and apparatus for mapping data items based on a respective priority value. As discussed above, the consolidation service and the mapping system may be separated from each other and not share any processing components, in which case each system may comprise its own processor and memory. Alternatively to being separated systems, the consolidation service and the mapping system may share one or more processors and/or one or more memories by these two systems. These two systems may be run on a same at least one processor and at least one memory, for example.

One benefit of using the consolidation service to transmit the data items mapped based on a respective priority value, or any other mapping method as described herein, is that the mapping system or apparatus does not need to collect or relay the actual data items itself, for example if multiple transmission sources exist. Instead, each data item may be transmitted from its respective source to the consolidation service. Depending on a configuration of the consolidation service and the mapping system, the priority values of the data items may be assigned in different manners. For example, a priority value may be embedded into the data item, which may be understood by the consolidation service. In another example, a priority value of a data item may be transmitted from the mapping system to the consolidation service directly and separately from the actual data item, said data item being transmitted to the consolidation service from its respective source, wherein the consolidation service is configured to match a received data item with a received priority value. This may lead to faster transmissions between different systems.

The consolidation service providing a single egress point for data items facilitates, for example, data logging of a vehicle to be requested by one or more external entities without said data logging and corresponding data item transfer being transmitted instead of other more operation-critical data items. For example, a first service team working on a first subsystem of a vehicle may request logged data items from the vehicle relating to said first subsystem. As data to and from the vehicle may be transmitted via the consolidation service, such a request would not take priority over the transfer of other data items that are needed for, for example, continuous operation of the vehicle. In a further example, if a second service team requests logged data items from a second subsystem of a vehicle, the data items will still need to be transmitted via the consolidation service. In this example, even if the first service team and the second service team request their respective subsystem data items, the requests and/or data items are handled via the consolidation service. Thus, in at least some embodiments, no request from a service team is able to override the priorities of data items to be transferred, as determined by the consolidation service system or the mapping system. This may allow multiple service teams, or other entities, to freely request data items to be transmitted independently of each other without said requests reducing the capacity of transmitting more important data items, such as video feed or remote operation controls, for example.

In an embodiment where the consolidation service is used to transmit the data items mapped based on a respective priority value or any other mapping method as described herein, a similar benefit is obtained. For example, if multiple mapping systems are used, the consolidation service may provide oversight to these systems such that any contradicting mappings are detected and nullified, for example when there is limited bandwidth for all systems. Another benefit is that priority values for data items can be set independently of each other, both by a single mapping system and by multiple mapping systems, as the consolidation service may keep track of critical data items that should not be disregarded or dropped. This can lead to a more simplified configuration of one or more of the mapping systems.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in sensor data management.

### ACRONYMS LIST

- ADS: automated driving system
- GSM: global system for mobile communication
- SAE: Society of Automotive Engineers
- WCDMA: wideband code division multiple access
- WiMAX: worldwide interoperability for microwave access
- WLAN: wireless local area network

**REFERENCE SIGNS LIST**

| | |
|---|---|
| 101, 102 | routes |
| 10A, 10b | vehicles |
| 130 | base station |
| 140, 150 | access point |
| 131, 141, 151 | coverage areas |
| 160 | charging station |
| 210 | set of predicted future connectivity opportunities |
| 300 - 360 | structure of the device of FIGURE 3 |
| 410 | video stream source |
| 420 | reporting subsystem |
| 430, 490 | logging subsystem, logging system |
| 440, 4100 | consolidation service |
| 450 | operator terminal |
| 460, 4120 | server |
| 470 | presence subsystem |
| 480 | control subsystem |
| 4130 | source of prioritized data |
| 4140 | allocation service |
| 4150 | partitioning service |
| 4160, 4170 | connectivity client |
| 4180 | connectivity mesh |
| 4190 | reassembly service |
| 4200 | data consumers |
| 510-530 | phases of the method of FIGURE 5 |

According to an example, there is provided an apparatus comprising at least one processing core and at least one memory storing instructions that, when executed by the at least one processing core, cause the apparatus at least to receive data items from a first plurality of systems of a vehicle and provide a first data stream, comprising at least a first part of the data items, to an operator terminal and a second data stream, comprising at least a second part of the data items, to a remote server, and receive further data items from a second plurality of systems of the vehicle via the operator terminal, provide a third data stream, comprising at least a first part of the further data items, to a vehicle system, and provide a fourth data stream, comprising at least a second part of the further data items, to the remote server.

The first data stream may be provided with a higher priority than a second data stream. provided with a higher priority than a fourth data stream.

Data items and further data items may be prioritized for inclusion into a first, second, third and fourth data streams based on which ones of systems of a vehicle they originate in.

According to an example, there is a method in an apparatus, comprising receiving data items from a first plurality of systems of a vehicle and providing a first data stream, comprising at least a first part of the data items, to an operator terminal and a second data stream, comprising at least a second part of the data items, to a remote server, and receiving further data items from a second plurality of systems of the vehicle via the operator terminal, providing a third data stream, comprising at least a first part of the further data items, to a vehicle system, and providing a fourth data stream, comprising at least a second part of the further data items, to the remote server.

According to an example, there is a non-transitory computer readable medium having stored thereon a set of computer readable instructions that, when executed by at least one processor, cause an apparatus to at least receive data items from a first plurality of systems of a vehicle and provide a first data stream, comprising at least a first part of the data items, to an operator terminal and a second data stream, comprising at least a second part of the data items, to a remote server, and receive further data items from a second plurality of systems of the vehicle via the operator terminal, provide a third data stream, comprising at least a first part of the further data items, to a vehicle system, and provide a fourth data stream, comprising at least a second part of the further data items, to the remote server.

## Claims

1. An apparatus comprising;
- at least one processing core and at least one memory in communication therewith storing instructions that, when executed by the at least one processing core, cause the apparatus at least to:
∘ store information of a first set of data items stored in a first vehicle , the data items of the first set being each assigned a respective priority value;
∘ obtain, for the first vehicle, a first set of future connectivity opportunities, each future connectivity opportunity comprising a future time and a location that the future connectivity opportunity is predicted to occur at, and
∘ send instructions to a vehicle application of the first vehicle, the instructions instructing the first vehicle to transmit at least one from among the first set of data items during at least one from among the first set of future connectivity opportunities, and
- a mapping module, in communication with the at least one processing core and at least one memory, configured to map the data items to be transmitted to the at least one connectivity opportunity based at least in part on the priority values assigned to the data items.

2. The apparatus according to any of claims 1, wherein the at least one memory further includes instructions that when executed cause the apparatus to send instructions to the vehicle application of the first vehicle to transmit a specific data item from the first set of data items such that a first part of the specific data item is transmitted during one future connectivity opportunity and a second part of the specific data item is transmitted during another future connectivity opportunity.

3. The apparatus according to any of the preceding claims, further including an event notification module connected with the memory and the processor, configured to receive an event notification from the first vehicle, determine, based on the event notification, a data item from among the first set of data items that should be transmitted using a dynamically selected future connectivity opportunity from among the first set of future connectivity opportunities or a currently active connectivity opportunity, and to send instructions to the vehicle application of the first vehicle to transmit the determined data item during the selected future connectivity opportunity or the currently active connectivity opportunity.

4. The apparatus according to any of the preceding claims, further including a compression determination module connected with the memory and the processor, configured to determine a level of compression of a data item based on the priority value of the data item or on characteristics of the future connectivity modules, and to send instructions to the vehicle application of the first vehicle instructing the first vehicle to compress a data item before transmitting it.

5. The apparatus according to any of the preceding claims, further including a driving behaviour module connected with the memory and the processor, configured to determine modifications of a driving behaviour of the first vehicle based on the first set of future connectivity opportunities, and to send instructions on the modifications to the vehicle application of the first vehicle.

6. The apparatus according to any of the preceding claims, further including a routing module connected with the memory and the processor, configured to determine modifications of a route of the first vehicle based on the first set of future connectivity opportunities, and to send instructions on the modifications to the vehicle application of the first vehicle or to a route planning module.

7. The apparatus according to any of the preceding claims, further including a characteristic prediction module connected with the memory and the processor, wherein the first set of connectivity opportunities is based on output options from the characteristic prediction module determined for a route and/or in the area of the first vehicle.

8. The apparatus according to any of the preceding claims, further including a nominal data transmission need prediction module connected with the memory and the processor, configured to receive route information of at least one additional vehicle and predict and output a nominal data transmission need of the at least one additional vehicle at one or more of the times and locations corresponding to the first set of connectivity opportunities, wherein obtaining the first set of connectivity opportunities is based on the output from the nominal data transmission need prediction module.

9. The apparatus according to any of the preceding claims, further including a nominal data transmission need receiving module connected with the memory and the processor, configured to receive route information of at least one additional vehicle and receive and output a nominal data transmission need of the at least one additional vehicle at one or more of the times and locations corresponding to the first set of connectivity opportunities, wherein obtaining the first set of connectivity opportunities is based on the output from the nominal data transmission need receiving module.

10. The apparatus according to any of the preceding claims, further including a nominal data transmission need transmitting module connected with the memory and the processor, configured to obtain a nominal data transmission need of the first vehicle at one or more of the times and locations corresponding to the first set of connectivity opportunities, and transmit information of the nominal data transmission need of the first vehicle to at least one other vehicle and/or at least one other vehicle planning apparatus.

11. The apparatus according to any of the preceding claims, further including an event prediction module connected with the memory and the processor, configured to receive route information of the first vehicle, predict or obtain information of a predicted event of a future route segment of at least one connectivity opportunity, and determine and output a minimum data transmission capacity that should be available at the future route segment of the at least one connectivity opportunity, the size of the minimum data transmission capacity being based on the predicted event, wherein obtaining the first set of connectivity opportunities is based on the output from the event prediction module.

12. The apparatus according to any of the preceding claims, wherein the sending of the instructions to the vehicle application of the first vehicle includes sending instructions configured to instruct a vehicle with autonomous capabilities, or sending instructions configured to be presented to a remote operator or driver of a vehicle.

13. The apparatus according to any of the preceding claims, wherein the at least one memory further includes instructions that when executed cause the apparatus to store information of a second set of data items stored in a second vehicle, the data items of the second set being each assigned a respective priority value, to obtain, for the second vehicle, a second set of future connectivity opportunities and to send instructions to a vehicle application of the second vehicle to transmit at least one from among the second set of data items during at least one from among the second set of future connectivity opportunities.

14. A method for data item management of a vehicle system , the method comprising:
storing information of a first set of data items stored in a first vehicle, the data items of the first set being each assigned a respective priority value;
obtaining, for the first vehicle, a first set of future connectivity opportunities, each future connectivity opportunity comprising a future time and a location that the future connectivity opportunity is predicted to occur at, and
sending instructions to a vehicle application of the first vehicle, the instructions instructing the first vehicle to transmit at least one from among the first set of data items during at least one from among the first set of future connectivity opportunities, the method comprising mapping the data items to be transmitted to the at least one connectivity opportunity based at least in part on the priority values assigned to the data items.

15. A non-transitory computer readable medium having stored thereon a set of computer readable instructions that, when executed by at least one processor, cause an apparatus to at least:
store information of a first set of data items stored in a first vehicle the data items of the first set being each assigned a respective priority value;
obtain, for the first vehicle, a first set of future connectivity opportunities, each future connectivity opportunity comprising a future time and a location that the future connectivity opportunity is predicted to occur at, and
send instructions to a vehicle application of the first vehicle, the instructions instructing the first vehicle to transmit at least one from among the first set of data items during at least one from among the first set of future connectivity opportunities, wherein the data items to be transmitted are mapped to the at least one connectivity opportunity based at least in part on the priority values assigned to the data items.
